Europäisches Patentamt

(19) European Patent Office

Office européen des brevets

(11) Publication number: **0 017 303**

**B1**

(12) **EUROPEAN PATENT SPECIFICATION**

(45) Date of publication of patent specification: **22.06.83**

(51) Int. Cl.³: **A 22 C 17/10, A 01 K 35/00**

(21) Application number: **80200304.6**

(22) Date of filing: **01.04.80**

(54) Method, apparatus and tag for tagging poultry and the like.

(30) Priority: **02.04.79 NL 7902559**

(43) Date of publication of application:
**15.10.80 Bulletin 80/21**

(45) Publication of the grant of the patent:
**22.06.83 Bulletin 83/25**

(84) Designated Contracting States:
**AT CH DE FR GB LI NL**

(56) References cited:
**BE - A - 839 165**
**BE - A - 839 166**
**FR - A - 2 067 554**

(73) Proprietor: **Record A.G.**
**Bälliz 49**
**Thun (CH)**

(72) Inventor: **Moolenaars, Jan Eric**
**Dillenburglaan 2**
**NL-6881 NV Velp (NL)**

(74) Representative: **Urbanus, Henricus Maria, Ir. et al,**
**c/o Vereenigde Octrooibureaux Nieuwe Parklaan 107**
**NL-2587 BP 's-Gravenhage (NL)**

Courier Press, Leamington Spa, England.

## Method, apparatus and tag for tagging poultry and the like

This invention relates to a method of tagging successively supplied poultry and the like with tags each comprising an approximately rectangular text carrier, a fastening portion comprising at least one perforation and at least one coilable prong, in which the tags are supplied in the form of a strip in which the tags are laterally interconnected at the text carriers in a rupturable manner, said strip being supplied stepwise, in synchronism with the supply of the pieces of poultry, to an application station, where two jaws are disposed which engage a tag and, while this is pressed against a piece of poultry and separated from the strip, attach it to the poultry by coiling the prong or prongs.

In this prior technique, as disclosed in BE—A 839166, each tag is engaged by the two jaws at the prong or prongs adjacent to the perforation in the fastening portion of the tag, so that an edge of the perforation functions as an abutment. As a consequence, the longitudinal dimension of prior tags is not, at least not exclusively, determined by the size of the mark to be put on the text carrier, but also by the minimum distance between the perforations and the prongs of the tag. This dimension must not be too small, because otherwise the approaching stroke of the jaws becomes too small and hence proper coiling of the prong or prongs, and reliable fastening of a tag to a head of poultry cannot be guaranteed. As a consequence, prior tags are relatively large, and in view of the fact that they are used by the millions, the loss of materal resulting from this is an important and disadvantageous cost item.

It is an object of the invention to provide a method which enables the use of tags which do not have this disadvantage.

For this purpose, in the method according to the invention, each tag is engaged by the jaws at the prong or prongs and at the opposite edge of the text carrier, during the coiling of the prong the tip thereof is guided into an associated perforation in the fastening portion, and for the supply of the strip of tags to the jaws, the strip is engaged by the same perforations.

By using not the perforations but a terminal edge of the text carrier as the abutment, the perforations in the fastening portion of each tag may be provided relatively closely to the prongs, and this so closely that the prongs can coil through associated perforations and hence ensure a reliable fastening to the poultry meat. The size of the text carrier is exclusively determined by the size of the text to be put on it, and consequently the consumption of material is limited to the absolute minimum. Moreover, the presence of perforations is put to good use for a reliable supply of the tags. This will be entered into more detail hereinafter.

The present invention also relates to an apparatus for carrying out the method. A prior apparatus used for this purpose is provided with jaws for engaging successive tags supplied in the form of a strip and having perforations and prongs, means for separating the tags from the strip, and pressing the tags against poultry, one of the jaws, the coiling jaw, being arranged for engaging and coiling the prong or prongs or a tag, and the other, the counter-jaw, being arranged for engaging an edge of the tag located at a distance from the prong, there being further provided a supply means for engaging the strip of tags and advancing the same stepwise to the jaws.

In such an apparatus of known design, disclosed in BE—A 839166, the counter-jaw, as explained above, engages with the perforations in the tag, while the supply means is formed as a resilient, reciprocating pawl, which engages with the strip of tags to be supplied in spaces present between the fastening portions of the strip, which are narrower than the text carriers. During this procedure, the strip lies flat on the bottom of a supply passage, and it will be clear that, in view of the small thickness of the tags, the resilient pawl of the supply means cannot engage with the strip in a reliable manner. As a consequence, slippage frequently occurs in practice, resulting in a tag that is not, or not properly, secured.

Another disadvantage of the prior apparatus is that the counter-jaw must repeatedly be moved into a perforation of the tag, as a consequence of which the jaw must be arranged, in addition to the approaching movement towards the other jaw, for carrying out movements perpendicular to the plane of supply of the strip of tags.

Both of these drawbacks are avoided in accordance with the invention by virtue of the fact that the counter-jaw is arranged to engage the terminal edge of the tag that is remote from the prong or prongs, and by virtue of the fact that the supply means is formed as a cam wheel which, in use, engages with the perforations in the strip of tags and is driven stepwise, attuned to the jaw movements.

Similar to a film in a projection camera the strip of tags is supplied to the space between the moved-apart jaws in an accurately timed and reliable manner, and for the fastening of a tag the jaws only need to move towards each other, unless it is desired for the entire assembly to be moved towards an article to be marked that is transported past it. From FR—A 2067554 it is known per sé to move a strip of tags by means of a cam wheel the teeth of which engage spaces between the text carrier portions of the tags. The known tags however, are not designed to coil the prongs in perforations provided in a fastening portion, which technique needs exact supply to the application station. Such accurate positioning of prongs and matching perforations cannot be guaranteed with the kind of transport according to the art.

The invention further relates to a tag for carrying out the method and/or for use in the applicator according to the invention. The tag, which consists of a substantially rectangular text carrier merging on one end into a fastening portion which at the end remote from the text carrier is provided with at least one coilable prong, and at least one perforation being formed in said fastening portion, (BE—A 839165 and 839166), is characterized in that the positioning of the perforation or perforations in relation to the prong or prongs has been so selected relative to the prong length that when a prong is coiled its tip penetrates into an associated perforation.

As explained above, such tags have the advantage that their maximum dimensions, and hence the consumption of material, are exclusively determined by the size of the mark or text thereon.

In a further elaboration of the invention, in a tag, at least in a strip of such tags interconnected in a rupturable manner by the adjacent edges of the text carriers, the distance between successive perforations corresponds to the pitch of the teeth of the transporting wheel of the tag applicator.

In illustration of the invention, one embodiment of the apparatus and the tag for tagging poultry will be described, by way of example, with reference to the drawing.

Fig. 1 is a diagrammatic elevational view, showing the part of the apparatus where the tags are supplied to the application station;

Fig. 1A and .1B show successive bending phases of a tag, Fig. 1A along the line A—A of Fig. 1;

Fig. 2 is an elevational view taken on the line II—II of Fig. 1, and showing the jaws in the application station; and

Fig. 3 is a detailed view showing the supply means on the line III—III of Fig. 1.

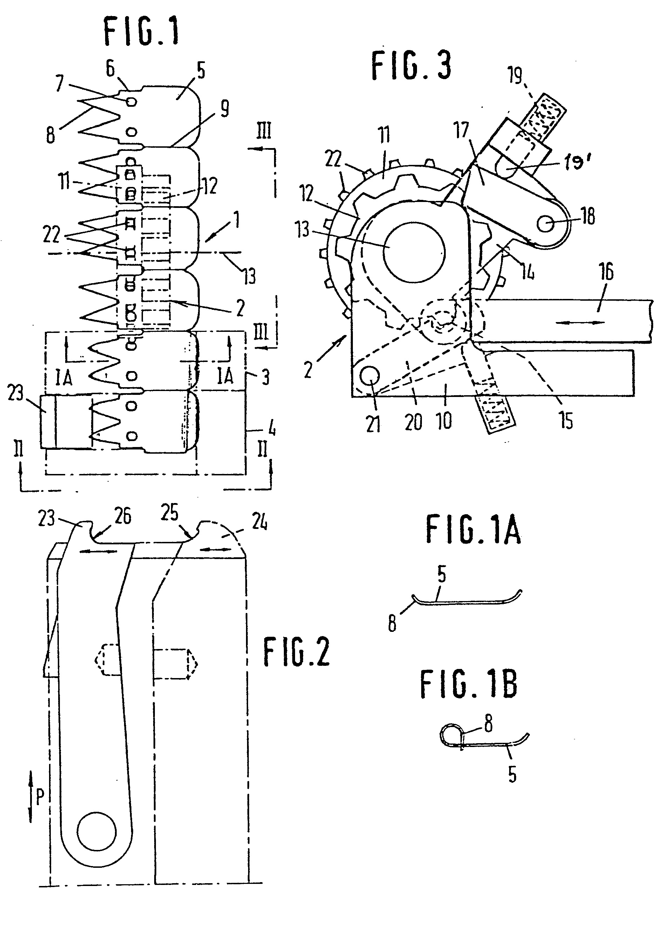

According to the drawing, in particular Fig. 1, a strip of tags 1 is transported stepwise by a supply means 2 to a preformer 3 and thence to an application station 4.

The tags 1 each comprise a text carrier 5, a fastening portion 6 with perforations 7 therein, and prongs 8. The number of prongs may vary, but associated with each prong 8 is a perforation 7, the distance between each prong 8 and its associated perforations 7, and the length of the prong being so selected that the prong can extend through the perforation in the manner shown in Fig. 1B.

The tags 1 are united into a strip at the text carrier 5 by means of a score line 9, which strip is wound from a roll. For the transporting means 2 reference is made to Fig. 3. The transporting means comprises a housing 10, in which a cam wheel 11 together with a gear wheel 12 is rotatable about a shaft 13. A rocker 14 is likewise, but independently of cam wheel 11 and gear wheel 12, mounted for rotation about shaft 13. Rocker 14 is connected through a spindle 15 to a fork 16 reciprocatable according to the arrow indicated therein. Furthermore, the rocker mounts a pawl 17 for pivoting movement about a pin 18. Pawl 17 is biassed into contact with the gear wheel by a spring 19 and a stud 19', so that when fork 16 moves to the right, rocker 14 pivots counter-clockwise about shaft 13, and pawl 17, catching behind a tooth of wheel 12, causes this gear wheel and hence cam wheel 11 to perform a transporting movement in the counterclockwise direction. During the return stroke of fork 16, pawl 17 clicks over the next tooth of wheel 12, and the wheel cannot turn back, as a second pawl 20 prevents such a clockwise rotation. Pawl 20 is mounted for pivoting movement about a pin 21 in housing 10. The slopes of the flanks of the teeth of gear wheel 12 and the configuration of the parts of pawls 17 and 20 cooperating with these flanks are attuned to the above functions of pushing and arresting.

The size and the pitch of cams 22 on cam wheel 11 are adapted to the perforations 7 in tags 1. In the embodiment shown, there are two perforations 7 in each tag, but it is clear that effective and accurate transportation of the strip of tags is also possible if a tag comprises one perforation 7 only, so long as the pitch of cams 22 is adapted to the spacing between the perforations in the strip.

The tags, which are thus accurately and stepwise transported by transporting means 2, reach a preformer 3, in which, in the manner shown in Fig. 1A, the tip of prongs 8 is bent approximately at right angles, while the opposite edge of the text carrier 5 is also bent, although to a lesser extent. In this condition the tags 1 arrive in the application station 4 between two jaws, namely, a prong coiling jaw 23 and a counter-jaw 24.

Counter-jaw 24 has a flank 25 comprising a berthing surface for the turned-up terminal edge of a text carrier 5 and an abutment surface terminating approximately at right angles thereto, so that when the jaws 23 and 24 are approaching each other the text carrier 5 comes to line in contact with jaws 24 without any clearance.

Coiling jaw 23 has a flank with a virtually circular-cylindrical cavity 26 in which the prongs 8 of a tag 1, already turned-up at right angles, thereto, are coiled in a reliable manner into the condition shown in Fig. 1B.

The assembly of jaws 24 and 23 can be moved in the direction of arrow P for moving a tag 1 engaged between the jaws, prior to the curling of the prongs 8 to a piece of poultry or other article to be tagged.

The incremental movements of cam wheel 11 are naturally attuned to the movements of jaws 23 and 21 so that each time after the application of a tag 1 to an article to be tagged a next tag is brought between the jaws.

## Claims

1. A method of tagging successively supplied poultry and the like with tags (1) each comprising an approximately rectangular text carrier (5), a fastening portion (6) comprising at least one perforation (7) and at least one coilable prong (8), in which the tags (1) are supplied in the form of a strip in which the tags (1) are laterally interconnected (9) at the text carriers (5) in a rupturable manner, said strip being supplied stepwise, in synchronism with the supply of pieces of poultry, to an application station (4), where two jaws (23, 24) are disposed which engage a tag (1) and, while this is pressed against a piece of poultry and separated from the strip, attach it to the poultry by coiling the prong or prongs (8), characterized in that each tag (1) is engaged by the jaws (23, 24) at the prong or prongs (8) and at the opposite edge of the text carrier (5), during the coiling of the prong (8) the tip thereof is guided into an associated perforation (7) in the fastening portion (6), and for the supply of the strip of tags to the jaws (23, 24), the strip is engaged by the same perforations (7).

2. Apparatus for carrying out the method according to claim 1, comprising jaws (23, 24) for engaging successive tags (1) supplied in the form of a strip and having perforations (7) and prongs (8), means for separating the tags from the strip, and pressing the tags (1) against poultry, one of the jaws (23, 24), the coiling jaws (23), being arranged for engaging and coiling the prong or prongs (8) of a tag (1), and the other, the counter-jaw (24), being arranged for engaging an edge of the tag located at a distance from the prong (8), there being further provided a supply means (2) for engaging the strip of tags (1) and advancing the same stepwise to the jaws (23, 24), characterized in that the counter-jaw (24) is arranged to engage the terminal edge of the tag (1) that is remote from the prong or prongs (8), and the supply means (2) is formed as cam wheel (11) which, in use, engages with the perforations (7) in the strip of tags (1) and is driven stepwise, attuned to the jaw movements.

3. A tag for carrying out the method according to claim 1 and/or for use in the apparatus according to claim 2, comprising a substantially rectangular text carrier (5) merging on one end into a fastening portion (6) with at the end remote from the text carrier (5) is provided with at least one coilable prong (8), and at least one perforation (7) being formed in said fastening portion (6), characterized in that the positioning of the perforation or perforations (7) in relation to the prong or prongs (8) has been so selected relative to the prong length that when a prong (8) is coiled its tip penetrates into an associated perforation (7).

4. A tag according to claim 3, characterized in that, in a tag (1), at least in a strip of such tags interconnected in a rupturable manner by the adjacent edges (9) of the text carriers (5), the distance between successive perforations (7) corresponds to the pitch of the teeth (22) of the transporting wheel (11) of the tag applicator as claimed in claim 2.

## Patentansprüche

1. Verfahren zum Markieren von aufeinanderfolgend zugeführtem Geflügel und dergleichen mit Markierungszeichen (1), welche jeweils einen näherungsweise rechtwinkligen Textträger (5), einen wenigstens eine Perforation (7) aufweisenden Befestigungsabschnitt (6) und wenigstens einen wickelbaren Gabelabschnitt (8) aufweisen, wobei die Markierungszeichen (1) in Form eines Bandes zugeführt werden, in welchem die Markierungszeichen (1) seitlich an den Textträgern (5) in zerreißbarer Weise miteinander verbunden sind und das Band schrittweise in Synchronisation mit der Geflügelzufuhr zu einer Anbringungsstation (4) transportiert wird, in welcher zwei Klauen (23, 24) vorgesehen sind, welche ein Markierungszeichen (1) ergreifen und, während dieses gegen ein Geflügelexemplar gedrückt und von dem Band abgelöst wird, es an dem Geflügel befestigen, indem der Gabelabschnitt oder die Gabelabschnitte (8) gewickelt werden, dadurch gekennzeichnet, daß jedes Markierungszeichen (1) von den Klauen (23, 24) an dem Gabelabschnitt oder den Gabelabschnitten (8) sowie an der gegenüberliegenden Kante des Textträgers (5) ergriffen wird, daß während des Aufwickelns des Gabelabschnitts (8) dessen Spitze in eine zugeordnete Perforation (7) im Befestigungsabschnitt (6) geführt wird, und daß zum Fördern des Bandes aus Markierungszeichen zu den Klauen (23, 24) in das Band durch die gleichen Perforationen (7) eingegriffen wird.

2. Vorrichtung zum Ausführen des Verfahrens nach Anspruch 1, mit Klauen (23, 24) zum Eingreifen in aufeinanderfolgende Markierungszeichen (1), in Bandform zugeführt werden und mit Perforationen (7) sowie Gabelabschnitten (8) versehen sind, mit Einrichtungen zum Ablösen der Markierungszeichen von dem Band und zum Andrücken der Markierungszeichen (1) gegen Geflügel, wobei eine der Klauen (23, 24), nämlich die Wickelklaue (23) so ausgebildet ist, daß sie in den Gabelabschnitt oder die Gabelabschnitte (8) eines Markierungszeichens (1) eingreift, während die andere, nämlich die Gegenklaue (24) so ausgebildet ist, daß sie eine im Abstand von dem Gabelabschnitt (8) angeordnete Kante des Markierungszeichens ergreift, ferner mit einer Zuführeinrichtung (2) zum Ergreifen des Markierungszeichenstreifens und zum schrittweisen Fördern desselben zu den Klauen (23, 24), dadurch gekennzeichnet, daß die Gegenklaue (24) dazu eingerichtet ist, die vom Gabelabschnitt oder von den Gabelabschnitten (8) entfernte Endkante des Markierungszeichens (1) einzugreifen, und daß die Zuführeinrichtung (2) als Nockenrad (11) ausgebildet ist, welches im Betrieb in die in den Markierungszeichen (1) ausgebildeten Perforationen (7) eingreift und in Abstimmung auf die Klauenbewegungen schrittweise angetrieben ist.

3. Markierungszeichen zum Ausführen des Verfahrens nach Anspruch 1 und/oder zur Verwendung in der Vorrichtung nach Anspruch 2, mit einem im wesentlichen rechtwinkligen Textträger (5), der an einem Ende in einen Befestigungsabschnitt (6) übergeht, welcher am vom Textträger (5) entfernten Ende mit wenigstens einem wickelbaren Gabelabschnitt (8) versehen ist, und mit wenigstens einer in dem Befestigungsabschnitt (6) ausgebildeten Perforation (7), dadurch gekennzeichnet, daß das Positionieren der Perforation bzw. Perforationen (7) in Relation zu dem Gabelabschnitt oder Gabelabschnitten (8) in bezug auf die Gabelabschnittlänge gewählt ist, so daß beim Wickeln eines Gabelabschnittes (8) dessen Spitze in eine zugeordnete Perforation (7) eindringt.

4. Markierungszeichen nach Anspruch 3, dadurch gekennzeichnet, daß bei einem Markierungszeichen, in wenigstens einem Band derartiger in zerreißbarer Weise im Bereich aneinanderstoßender Kanten (9) der Textträger (5) miteinander verbundener Markierungszeichen der Abstand zwischen aufeinanderfolgenden Peforationen (7) der Teilung der Zähne (22) des Transportrades (11) des in Anspruch 2 beanspruchten Markierungszeichen-Applikators entspricht.

**Revendications.**

1. Une méthode de marquage de volailles et similaires alimentées à la suite, avec des marques (1) comportant chacune un support de texte (5) approximativement rectangulaire, une partie de fixation (6) comprenant au moins une perforation (7) et au moins une dent (8) susceptible d'être roulée en couronne dans laquelle les marques (1) sont alimentées sous la forme d'une bande dans laquelle les marques (1) sont interconnectées latéralement au droit des supports de texte (5) d'une manière séparable par rupture, ladite bande étant alimentée pas à pas, en synchronisme avec l'alimentation des pièces de volailles, à une poste d'application (4) où deux mâchoires (23, 24) sont disposées pour coopérer avec une marque (1) et, tandis que celle-ci est pressée contre une pièce de volaille et séparée de la bande, la fixer à la volaille en enroulant la dent ou les dents (8), caractérisée en ce que chaque marque (1) est engagée par les mâchoires (23, 24) au droit de la dent ou des dents (8) et au droit du bord opposé du support de texte (5) et en ce que, pendant l'enroulement de la dent (8), la pointe de cell-ci est guidée dans une perforation associée (7) dans la partie de fixation (6) et en ce que, pour l'avancement de la bande de marques aux mâchoires (23, 24), la bande est engagée par les mêmes perforations (7).

2. Un appareil pour la mise en oeuvre de la méthode selon la revendication 1 comprenant des mâchoires (23, 24) pour engager les marques (1) successives alimentées sous la forme d'une bande et comportant des perforations (7) et des dents (8), des moyens pour séparer les marques de la bande et presser les marques (1) contre la volaille, une des mâchoires (23, 24), la mâchoire d'enroulement (23) étant disposée pour engager et rouler la dent ou les dents (8) d'une marque (1) et l'autre, la contre mâchoire (2), étant disposée pour engager un bord de la marque placé à une certaine distance de la dent (8), un moyen d'alimentation (2) étant de plus prévu pour engager la bande de marques (1) et avancer celle-ci pas-à-pas aux mâchoires (23, 24) caractérisé en ce que la contre-mâchoire (24) est disposée pour engager le bord terminal de la marque (1) qui est éloigné de la dent ou des dents (8) et le moyen d'alimentation (2) est formé par une roue de came (11), qui, en cours d'utilisation, s'engage dans les perforations (7) de la bande de marques (1) et est entraînée pas-à-pas en synchronisme avec les mouvements des mâchoires.

3. Une marque pour mettre en oeuvre le procédé selon la revendication 1 et/ou être utilisée dans l'appareil selon la revendication 2 comprenant un support de texte (5) sensiblement rectangulaire se prolongeant à une extrémité par une partie de fixation (6) qui, à l'extrémité éloignée du support de texte (5), présente au moins une dent enroulable (8) et au moins une perforation (7) étant formée dans ladite partie de fixation (6) caractérisée en ce que le positionnement de la perforation ou des perforations (7) par rapport à la dent ou aux dents (8) a été choisi de telle manière par rapport à la longueur de la dent que, lorsqu'une dent (8) est enroulée, sa pointe pénètre dans la perforation (7) associée.

4. Une marque selon la revendication 3 caractérisée en ce que, dans une marque (1), au moins dans une bande de telles marques interconnectées de manière à être séparables par rupture par les bords adjacents (9) des supports de texte (5), la distance entre les perforations (7) successives correspond au pas des dents (22) de la roue transporteuse (11) de l'applicateur de marques comme revendiqué dans la revendication 2.

0 017 303

FIG.1

FIG.3

FIG.2

FIG.1A

FIG.1B